# EUROPEAN PATENT APPLICATION

(11) **EP 0 729 884 A1**
(43) Date of publication of application: **04.09.1996**
(21) Application number: 96500026.8
(22) Date of filing: 01.03.1996
(51) Int. Cl.: B64D 17/00

(54) **Device to prevent glider parachute folds**

(30) Priority: 02.03.1995 ES 9500405
(71) Applicant: Lucas Martinez, Guillermo, 03400 Villena (Alicante) (ES); Ubeda Guillen, Juan Jose, 03400 Villena (Alicante) (ES)
(72) Inventor: Lucas Martinez, Guillermo, 03400 Villena (Alicante) (ES); Ubeda Guillen, Juan Jose, 03400 Villena (Alicante) (ES)
(74) Representative: Perez Bonal, Bernardo

(57) **Abstract**

Easy to install and very flexible, acts against the folds caused by turbulences, recovering normal air pressure inside the sail profile, shaped as a double sail stiffener and recovery device, to be installed on the bottom surface, made up of a cover (10) and a carbon fiber core (9), telescopically extensible in the case of the first recovery device and capable of installation both at the meeting point between the leading edge and the bottom surface and close to the trailing edge, allowing the end to be curved, whereas the second recovery device, also double, is connected in orthogonal arrangement between them.

## Description

### OBJECT OF THE INVENTION

This invention refers to devices to prevent accidental folds in glider parachutes, either already existing or newly manufactured, that can be quickly and easily installed and very elastic, fundamentally designed to prevent accidental glider parachute folds due to air turbulence, recovering normal air pressure within the sail profile, by means of a double recovery device to be installed on the wing bottom surface, made up of a cover and a carbon fibre core, of either circular or square section, telescopically extensible, installing the leading section of the first stiffener at the point where the leading edge and the wing bottom surface meet, whereas the second is placed at the afterpart of the wing bottom surface, separated from the trailing edge, allowing its end to be curved and located where the third or fourth band starts, in accordance to the type of glider parachute and forming a double central core double "T" shape with the other recovery device, in orthogonal connection using conventional joining means at the respective ends of this latter recovery device against asymmetrical folds and of the double recovery device against symmetrical folds, located transversely in respect to the former one.

### BACKGROUND OF THE INVENTION

The glider parachute is a device evolved from hang gliding and windsurfing, consisting of a flexible and light weight glider which, when folded, may be carried in a carry bag or back pack, allowing easy transportation by a single person to a hilltop so that, from an appropriate slope of that hilltop, given that it is not necessary for the slope to reach a 45° angle, once the glider parachute is duly open, its carrier may then run down the slope and become airborne with it.

There are lengthy gliding period as well as long gliding distance glider parachutes, the former devices can stay airborne for up to one and a half hours under appropriate gliding conditions, whereas the latter may cover distances of up to 150 km.

Both of them share the same basic structure, which consists of a wing profile with differently shaped curves on its top and bottom surfaces, in accordance with a widely rounded frontal leading edge and a peaky trailing edge.

These curves are commanded at will by the pilot by acting upon suspension lines consisting of hundreds of control lines distributed throughout the wing bottom surface and attached to an alignment of parallel ribs that configure cells internal to the profile and which may furthermore be subdivided into smaller honeycomb-like cavities which ends are the attachment points of the consecutive suspension alignments, known as bands, and having each cell an opening at the leading edge of the profile, which purpose is to enable the ingress of air during the run, in order to properly fill up the air cells and cavities.

The pilot may maneuver within normal angles of incidence of up to 20° the assembly of roughly one hundred suspension lines not only at the profile trailing edge, but also at the wing tailpieces or stabilizers and, all of this, from the comfortable position of a harness which may be completed, in the more extreme cases of lengthy gliding period and long gliding distance, through the addition of a seat and even a back support, which also prevents the possibility of direct body impacts during emergency landings.

In spite of this the elements of the ribs and the design of the leading edge mouth or opening, as the materials of the wings, with a surface extension of some 25 m², make it possible to take off with minimal slopes and also, at the other end of the range, with relatively high winds of up to 20 km/h.

The fact that only very brief flight practice periods are needed and that take-off maneuver only requires extending the arms, pulling the lines taut and running whilst holding the harness and the release hooks has enabled this sport to become very popular within a great number of people, which have had to personally and gradually experience adverse weather conditions.

The main glider parachute flying problems are the three types of air turbulences as well as aerodynamic turbulence, all of which generate vertical or horizontal axis whirlwinds of different magnitudes.

Out of the former ones, the immediately detectable ones are obstacle turbulences, that sometimes reach up to ten times its height, upward or downward moving thermal streams which sometimes are difficult to appreciate (cumulus, thermal foci), shear turbulences due to the collision of winds with different wind force magnitudes, directions and speeds, with a nearly always horizontal turbulence, whereas the aerodynamic, trail or wake blast turbulences are generated by near-by glider parachutes or any other type of flying craft.

All the above turbulences affect the stability of the glider parachute, both by pendular effect and by aerodynamic or Archimedean effects, to a different extent as a function of the magnitude of the turbulence, and do furthermore affect the parachuting or action of separation of the boundary layer, loss of support causing changes from a 20° profile incidence angle to others ranging from 45° to 90°.

Under these adverse but nevertheless commonly experienced flying conditions, the wing sometimes folds and the air cavities and cells consequently partly deflate, sometimes so much that there hardly are any openings left facing the wind so as to allow a cell to be newly filled with air and, from it, the remaining adjacent cells, until the appropriate wing profile is once again recovered.

The resulting lift loss loosens the load transmission lines generating substantial trajectory changes, rotations, twists, take off cross lifts, etc., and highly complex and variously enfolding movements, as a function of the greater or lesser wing fold asymmetry, reaching controllable spins with angular speeds greater than 60 km/h.

Wind folds may be controlled by acting upon the saddle, suspension handles or trims (pull cords that may be fixed or loosened at will, but are not regulated by pulling from them as the rest of the rigging) as long as the folds do not extend beyond on-flight irreversibility, not being currently aware of the existence of any device to prevent glider parachute folds.

Finally, it would be worthwhile to emphasize that in the glider parachute jargon it is common to know as asymmetrical fold the side fold, always irregular, in the direction of the ribs, whereas the lengthwise one is referred to as symmetrical fold, due to this being the effect produced by the fold from a distance, even taking into consideration that it is uncommon to encounter a simultaneous fold of the respective leading and trailing edges.

### DESCRIPTION OF THE INVENTION

The solution herein advanced consists of a flight safety system, designed to be used in glider parachutes, readily attachable to existing glider parachutes and easy to install, by interposition, during the manufacturing process of new glider parachutes.

It is effective in respect of the folds caused by turbulences of any kind (obstacle, thermal, shear and trail blast) whether they are highly asymmetrical or perfectly symmetrical, recovering normal sail profile air pressure within a maximum time period of only two seconds, and very often within an even shorter time period.

This prevents falls from low heights, unavoidable otherwise, given that descending speeds might be higher than 8 m/s, which prevents the possibility of any compensating reaction from even the most experienced pilot.

The main reason being that with this invention not only the cells do not fully empty out, but they instead start recovery at the same time the fold is caused by the wind pressure effect.

To this end no account is taken of any kind of pilot reaction, actuating any accessory element of the glider parachute, as this device does instead operate automatically, so that the human factor does not play any part whatsoever, being this the reason of the extraordinary fast response, in which the pilot does not notice anything other than a small movement, whereas if it happens during an intentional parachuting or rotation, this automatic unfold feature will cause pilot movements to be easier, without creating extreme situations that may threaten his safety.

The device to prevent asymmetrical folds consists of a double sail stiffener, to be installed on the wing bottom surface, made up of a narrow cover made of the same material as the sail or of similar material, with a variable width according to the model of glider parachute and appropriate for its width, attached at an approximate distance of between one and one and a half meters from the end of each stabilizer, so that it does not affect the "ear folding" operation of these stabilizers.

Inside this cover there is a carbon fiber core, either tubular with a maximum circular diameter cross section between 2 and 3 cm or laminar with rounded edges, between 4 and 6 cm wide and 1 cm high, telescopically extensible and fitted with conventional locking balls to prevent any retraction of its extension.

This device may be split in two, with continuous alignment and central origin and with joining means between both parts.

The leading section part of this recovery device shall be installed at the leading edge, just on the lower position of its change of curvature where the bottom surface starts, whereas the rear section is to be installed at the rear end of the bottom surface, straight and removed at both ends about 20 or 30 cm from the trailing edge, so as to not interrupt the maneuvers of extreme curving of the outward end of the wing, when the pilot pulls the suspension lines.

More specifically, when the glider parachute has four suspension bands, it shall then be located as described where the fourth band starts, whereas in the case of three band glider parachutes, it would then be located at the second band.

The installation would logically take place before takeoff, whilst the glider parachute is being unfolded, when it may be effected in about three minutes and its operation when a fold takes place, because of wind force, would be similar to the pull of a fishing rod, with the difference that in the first case the speed of the turbulence would allow it to return to its initial position much faster.

The second recovery device, to prevent symmetrical folds, has the same structure than the previously described against asymmetrical folds, that is to say, has an external cover and an equivalent core, whereas its location is totally different.

In fact, this second device is arranged orthogonally in respect of the first one, joining the two bodies of the previous one, also with a double connection structure, only that this time it will be arranged in the direction of the ribs and in a symmetrically central location, and will be held by means allowing it to turn, in a way similar to that of the conventional safety tab or clasp, being these central bars capable of moving to the left and to the right both during take offs and landings, thus improving its maneuvering capacity.

These central bars or cores are arranged to different lengths, as a function of the characteristics of the glider parachute, covering both the three and four band models, in compliance with the different locations and following the description of the asymmetrical fold prevention device previously described.

These cross-sectional parts or cores are also arranged in a double fashion, although they are joined together by two self locking rings that allow the parts to move without affecting the maneuver being undertaken by the pilot and further allow them to remain capable of returning by themselves to their original frontally unfolded position.

This device offers the additional feature of aiding pilot maneuvering, when height is to be lost by the procedure called "pulling the bands", contributing to this procedure the additional advantage of a safety top that prevents folding during the maneuver, as will be observed further on when describing the solution to be adopted in respect of the symmetrical fold in a situation not desired, but forced upon the glider parachute by the effect of strong winds.

These folds correspond to the consecutive positions of the detail drawings illustrating the preferential example of execution to be described.

### DESCRIPTION OF THE DRAWINGS

In order to complement the description being effected and with the aim of aiding towards a better understanding of the features of the invention, this patent specification includes, as an integral part thereof, a set of drawings in which, for purposes merely illustrative but never limitative, the following has been duly represented:

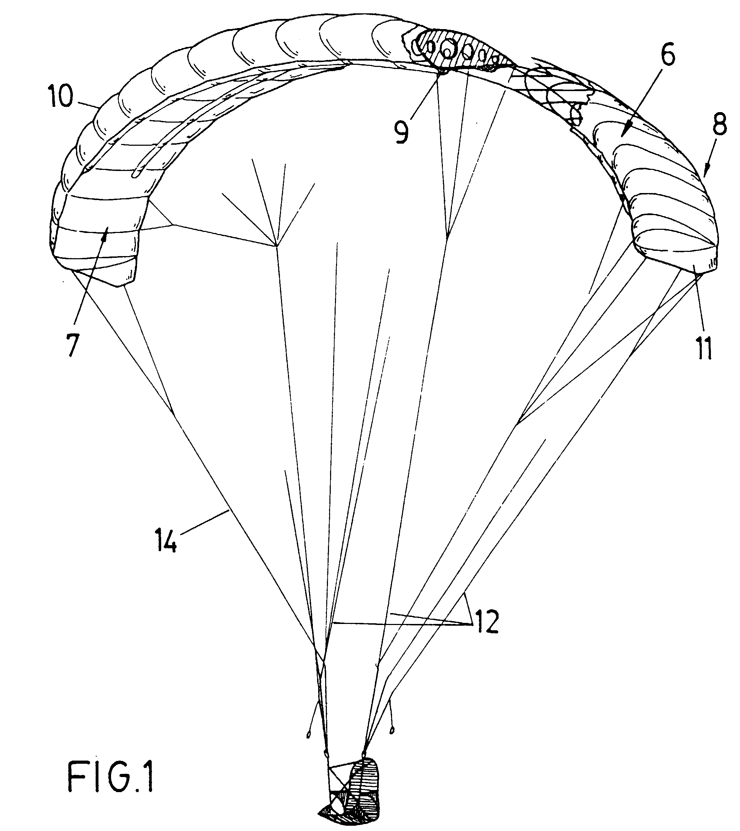

Figure 1 represents a perspective view of the glider parachute in flight arrangement, showing the anti-asymmetrical folding recovery devices, object of part of this invention.

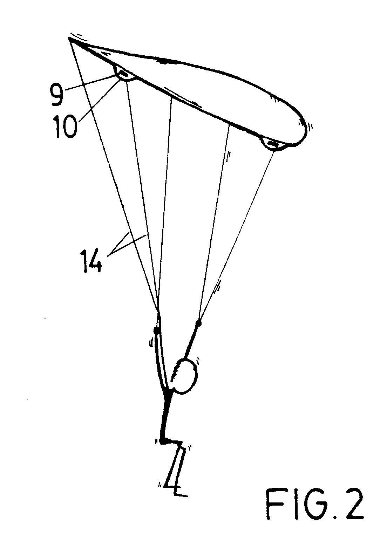

Figure 2 is a schematic and idealized section of the wing profile and the arrangement of the invention on the bottom surface, in the case of the four band glider parachute, corresponding to this first recovery device.

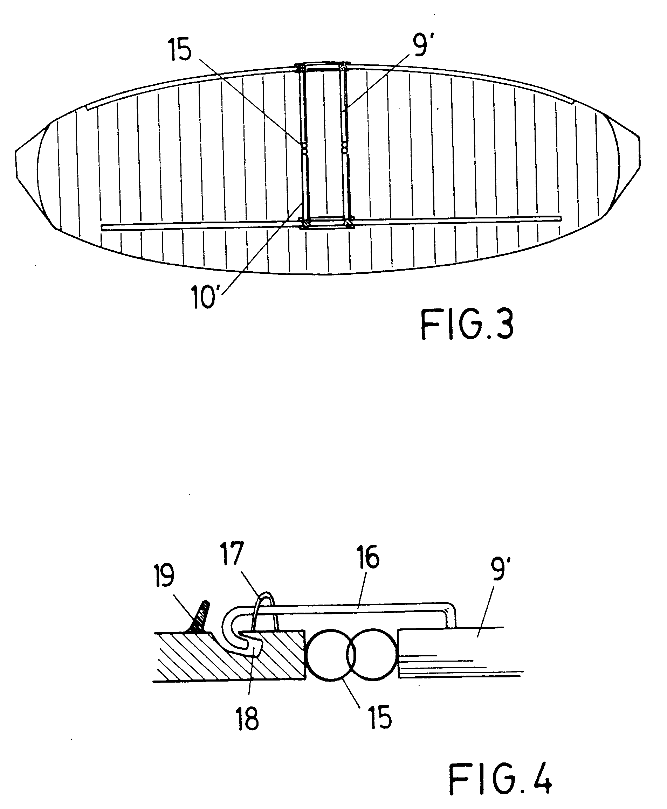

Figure 3 is a lower schematic view of the glider parachute with both recovery devices, to prevent asymmetrical folds and to prevent symmetrical folds, duly installed.

Figure 4 is a detail representation of the joint of the part ends corresponding to the core of one of the two symmetrical recovery devices, being it possible to observe therein the self-clasping rings, the external coupling, the guide, the coupling slot and the safety top.

Figure 5 is a set or different arrangements of the opposite ends of the previously described joints, all of which refer to folding movements in the presence of strong winds, and the first one of them also in cooperation with a voluntary folding operation during a height losing maneuver.

### PREFERRED EXECUTION OF THE INVENTION

Upon observing the previously mentioned figures it is possible to notice how the invention herein advanced consists of a safety system for glider parachutes, either already existing or newly manufactured, that compensates nearly instantaneously the effect of wing folds brought about by the action of air turbulence, caused by obstacles, thermal effects, wind shear and wake blast, both the highly asymmetrical and the symmetrical ones, recovering normal wing profile air pressure, avoiding drops to the ground from low height, and ensuring that the air cells (6) do not lose air pressure fully.

The asymmetrical fold recovery device consists of a double device, a sail stiffener, to be installed on the bottom surface (7), made up of a narrow cover (10) manufactured with the same material used for the sail, or a similar material, attached at a distance between one meter and meter and a half from the end of each stabilizer (11), inside which runs a carbon fiber tubular core (9), of circular or square section, capable of telescopic extension and fitted with conventional locking balls in order to prevent extension backlash, split in two from the center of the wing and fitted with conventional joining means in order to couple the two parts together.

The leading section of the recovery device is installed at the joint between the leading edge (10) and the bottom surface (7), whereas the rear section is located at the rear end of the bottom surface (7), at a distance between 20 and 30 cm from the trailing edge (8), allowing its end to curve, when the suspension lines (12) are duly pulled, when the glider parachute has four suspension (12) bands (14), it is then located where the fourth band starts, whereas in the case of three band glider parachutes it is then placed at the second band (14), with an installation time of about three minutes, and its own elasticity causes it to recover its initial position after a wing fold takes place.

The second recovery device, intended to prevent symmetrical folds, also double and with an orthogonal connection, by conventional means, of its respective ends to the other asymmetrical fold double recovery device, each of which is made up of a cover (10'), a core (9') in double arrangement aligned at their opposite ends and being the core parts (9') joined to each other by rings (15) that enable rotating and twisting movements, as well as of external clasps (16), internal at the same time in respect of holding and guidance clips (17), anchored at one of its ends and with a hook at the opposite one, which plays inside a slot (18) and which, when the core parts (9) are cranked, flushes against the projection (19), which limits its articulation up to a certain number of degrees of turn, of one of these parts in respect of the other one, appropriate for the purposes intended.

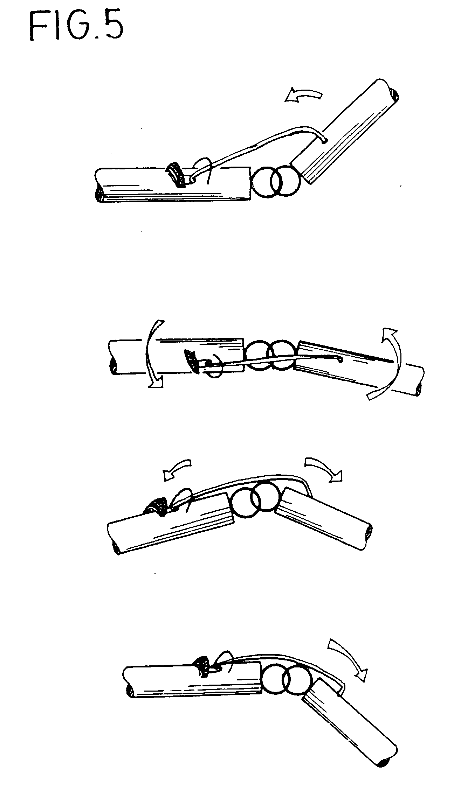

In the set of schematic drawings of Figure 5 it may be consecutively observed, in the first such drawing, during the execution of maneuvers of intended folding of the second bands, seeking height losses and also during other unintended ones caused by the effect of strong winds, how the upward folding action of the rear of the glider parachute is prevented by the clash of the top of the clasp (16) against the projection (19).

The remaining cases do all refer to folding actions derived from the effect of strong winds; in the second position of the drawing it may be observed how this lower front fold of the glider parachute is prevented by the action of a greater introduction of the anchoring clasp (16) inside the slot (18), as is also the case in the fourth and last.

In the third position, simultaneous symmetrical fold from both edges, the displacement of the clasp (16) inside the slot logically halves, so that the recovery time, for a given wind speed, is also similarly reduced.

It is not considered necessary to extend this description any further on the understanding that any expert in the art would already have enough information to understand the scope of the invention and the advantages derived therefrom, as well as to proceed to reproduce it.

It is to be clearly understood that the materials, shape, size and arrangement of the elements may be changed as long as any such change does not alter the essential features of the invention.

The terms used to describe this specification must always be interpreted in a wide, and not limitative, sense.

## Claims

1. Devices to prevent glider parachute folds, essentially characterized by their configuration as a safety system for glider parachutes, either already existing or newly manufactured, easy to install and which compensates nearly instantaneously and very flexibly the folds caused by turbulences caused by the presence of obstacles, thermal air currents, shear winds and wake blasts, from the highly asymmetrical to the fully symmetrical ones, recovering normal air pressure within the profile of the sail, preventing sudden falls to the ground from low heights, avoiding total air pressure loss inside air cells (6), based on two double recovery devices, sail stiffeners, to be installed on the wing bottom surface (7), made up of narrow covers (10) and (10') manufactured with the same material used to make the sail, or a similar material, and internal tubular cores (9) and (9'), forming a double "T" shape with a double central core, with orthogonal connection, using conventional means, at their respective ends, of the double recovery device to prevent asymmetrical folds, the longer of the two, and the double recovery device against symmetrical folds, arranged across the first device.

2. Devices to prevent glider parachute folds, as per the previous claim, characterized because the first recovery device, designed to prevent asymmetrical folds, is attached at a distance between one meter and meter and a half from the end of each stabilizer (11), inside which runs a carbon fiber tubular core (1), of circular or square cross section, telescopically extensible and fitted with conventional locking balls, to prevent backlashes in respect of its extension, split in half from the center of the wing and fitted with conventional means to join the two parts together.

3. Devices to prevent glider parachute folds, as per the previous claims, characterized because the leading section of the first stiffener device is installed at the point where the leading edge (10) and the bottom surface (7) meet, whereas the rear section is located at the rear area of the bottom surface (7), at a distance of some 20 to 30 cm from the trailing edge (8), allowing its end to be curved, by pulling from the suspension lines (12), when the glider parachute has four suspension (12) bands (14), it is then located at the origin of the fourth band, whereas in the case of three band glider parachutes, it is then located at the second band (14).

4. Devices to prevent glider parachute folds, as per the first claim, characterized because the second recovery device, designed to prevent symmetrical folds, is double, and also because each of them is made up of a double cover (10') and core (9') and because its opposite ends are aligned, besides the parts of the core (9') being joined to each other by rings (15) that enable the performance of rotations and twists, as well as by external clasps, at the same time internal in respect of holding and guidance clips (7), anchored at one of its ends and with a hook at the opposite one, which hook plays inside a slot (18) and which, when the core parts (9) are cranked, flushes against the projection (19), which limits its articulation up to a certain number of degrees of turn, of one of these parts in respect of the other one, appropriate for the purposes intended.

5. Devices to prevent glider parachute folds, as per the fourth claim, characterized because both during the second band (14) voluntary folding maneuvers, seeking height descents, and during other involuntary ones caused by strong winds, the edges (8) and (10) recover quickly from those folding actions, either upwards or downwards in respect of the trailing edge (8) of the glider parachute or else downwards in respect of the leading edge (10) due to, respectively, being prevented by the top of the clasp (16) in the projection (19) or by the clasp (16) firmly locking up inside the slot (18), or else, during a simultaneous symmetrical folding from both edges (8) and (10), the displacement of the clasp (16) inside the slot (18) is halved, so that the recovery time for a given wind speed is proportionally reduced.

6. Devices to prevent glider parachute folds.
